(19) Europäisches Patentamt
European Patent Office
Office européen des brevets

(11) **EP 3 076 112 A1**

(12) **EUROPEAN PATENT APPLICATION**

(43) Date of publication:
05.10.2016 Bulletin 2016/40

(21) Application number: 16168859.3

(22) Date of filing: 11.12.2012

(51) Int Cl.:
*F25D 17/06* (2006.01)  *F25B 49/02* (2006.01)
*F25D 29/00* (2006.01)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 12.12.2011 IT TO20111136
21.12.2011 IT TO20111186
30.12.2011 IT TO20111239
30.12.2011 IT TO20111240

(62) Document number(s) of the earlier application(s) in accordance with Art. 76 EPC:
12818599.8 / 2 791 597

(71) Applicant: **Indesit Company S.p.A.**
**60044 Fabriano (AN) (IT)**

(72) Inventors:
• **LIUZZO, Stefano**
**00141 Roma (IT)**
• **SUARDI, Alessandra**
**60015 Falconara Marittima (AN) (IT)**
• **SABATINI, Giorgio**
**63030 Colli del Tronto (AP) (IT)**
• **AKSOY, Sertan**
**45030 Merkez - Manisa (TR)**

(74) Representative: **Guerci, Alessandro et al**
**Whirlpool Europe S.r.l.**
**Patent Department**
**Viale G. Borghi 27**
**21025 Comerio (VA) (IT)**

Remarks:
This application was filed on 10-05-2016 as a divisional application to the application mentioned under INID code 62.

(54) **METHOD AND DEVICE FOR CONTROLLING A REFRIGERATING APPLIANCE, AND REFRIGERATING APPLIANCE IMPLEMENTING SAID METHOD**

(57) The current invention relates to a method for controlling a refrigerating appliance, the refrigerating appliance comprising a refrigerating circuit that includes a variable-speed compressor, at least one fan for conveying refrigerating capacity and at least one compartment (TF) cooled by the refrigerating circuit, the method according to the invention comprising a step of determining a silencing condition of the refrigerating appliance by setting a fixed speed value of the fan.

FIG. 5

**Description**

**[FIELD OF THE INVENTION]**

The present invention relates to the field of household appliances, in particular to a method and a device for controlling a refrigerating appliance.

The present invention also relates to a method and a device for controlling the noise generated by a refrigerating appliance. The present invention also relates to a method and a device for controlling the temperature in a freezer compartment of a refrigerating appliance.

The present invention further relates to a method and a device for controlling the defrosting step of a refrigerating appliance.

In addition, the present invention relates to a refrigerating appliance implementing the method of the present invention.

**[PRIOR ART]**

Refrigerating appliances are known which comprise at least one refrigerated compartment, a door allowing access to the refrigerated compartment, and a refrigerating circuit implementing a refrigerating cycle.

In the refrigerating circuit, a compressor compresses a cycle fluid, also called refrigerating fluid (e.g. Freon or ammonia), in order to cause the fluid to change from the gaseous state to the liquid state. This first change of state produces heat, which is extracted from the cycle through a coil in direct contact with the environment outside the refrigerating appliance. Subsequently, the fluid in the liquid state is caused to expand and evaporate in an evaporator and, when brought into direct thermal contact with the refrigerated compartment, it subtracts heat from the latter.

Modem refrigerating appliances comprise a variable-speed compressor, also called variable-capacity compressor, which can modulate the rpm of its own electric motor and therefore the cooling capacity of the circuit in which it has been inserted.

Several types of refrigerating appliances are known. Among these, by way of non-limiting example, appliances can be identified which comprise one or more refrigerating compartments, e.g. a refrigerator compartment having an internal temperature slightly above 0°C (e.g. 4-5 °C), which is normally used for preserving unfrozen fresh foods or objects, and/or one freezer compartment at a freezing temperature below 0°C (e.g. - 18°C), which is normally used for preserving frozen foods or objects; each compartment is normally fitted with its own access door.

So-called "no-frost" refrigerating appliances also exist, wherein the cold is conveyed from the evaporator to the compartments by means of one or more fans through pipes and outlets: Access to the freezer compartment is typically direct, whereas access to the refrigerator compartment occurs through a flow regulator, called damper, which may simply open or close the access to the compartment or adjust it in a variable manner between a maximum and a minimum values.

It is also known that the fan speed can be controlled.

Current refrigerating appliances comprise a control unit that controls the revolution speed of the compressor depending on the cold request received from the thermodynamic circuit, which can be detected, for example, by monitoring the temperature in the compartments. The latter is, in fact, indicative of the required refrigerating power: typically, higher temperature values imply a request for higher refrigerating power. Vice versa, a reduction in the temperature inside the compartment to be cooled is interpreted as a request for less refrigerating power.

During the operation of the refrigerating appliance, formation of frost may occur, in particular on the coldest parts such as the evaporator of the refrigerating circuit, which is due to the moisture present inside the refrigerating appliance. The frost layer grows in operation, also leading to increased thermal insulation between the evaporator and the environment to be refrigerated, thus adversely affecting thermal exchange efficiency.

To regain operational efficiency, defrosting cycles are normally executed wherein the control system turns on heating means for thawing the frost, thus removing it from the evaporator. During the defrosting cycle, the compressor is normally turned off.

When the refrigerating appliance is operating in heavy conditions, e.g. because the door is opened frequently, or because the appliance is operating in hot environments, the compressor increases its on-time percentage and speed; in the worst case, it may have to stay always on in order to be able to provide all the necessary refrigerating capacity.

An aggravating factor is found in refrigerating appliances of the type known as "no-frost". In these appliances, the evaporator operates in a condition of forced convection and is subject to greater load loss increase and icing.

In fact, in heavy operating conditions the evaporator gets covered with ice, which reduces its thermal exchange efficiency.

Icing increases with temperature and compressor speed. The humid air adheres to the evaporator walls, thereby promoting icing and giving rise to a phenomenon of progressive icing increase such that the refrigerating gas will absorb less and less heat from the internal compartment of the refrigerating appliance. In these conditions as well, the compressor will increase its on-time percentage and speed, or in the worst case it may even stay always on.

One problem that must be faced is therefore to ensure the utmost energetic efficiency in all operating steps and conditions, even the heaviest ones, of a refrigerating appliance of any type equipped with a variable-speed compressor, by optimizing the refrigerating appliance's energy consumption and compressor speed.

The need for ensuring the utmost comfort when using refrigerating appliances also leads to consider that they can generate noise, which is mostly due to the operation of components such as fans and compressors. Noise conditions may be especially annoying in some time situations, e.g. at night, when they are more easily noticed because of the absence or low level of other noise sources.

One problem that needs to be solved is therefore to be able to minimize the noise generated by the refrigerating appliance, when desired, while still ensuring the proper operation thereof.

In the freezer compartment, the temperature may be subject to quick variations, e.g. sudden increases, when objects to be frozen are placed therein, such as foods, which have a higher temperature, e.g. a room temperature of approx. 20°C.

It is known that the system that controls the temperature in the freezer compartment allows to activate, e.g. by means of a switch, a rapid freezing function that keeps the compressor continuously on for a predefined time or for a time set by the user, who therefore must remember to deactivate the function by operating the switch, or for a time set by the temperature control system. In a no-frost refrigerating appliance, the compressor and the fan are brought to their maximum speeds.

The temperature control system measures the temperature inside the compartment, which *de facto* is determined by the air temperature: when the cut-off temperature is reached (e.g. - 25°C), the system will deactivate the rapid freezing function and return into a normal control condition.

The control systems known in the art, however, do not ensure optimal temperature control conditions in the compartment, because they do not take into account the temperature of the objects placed therein, but only the temperature of the air inside the compartment, which normally decreases much more rapidly. Thus, there is a risk that, when the rapid freezing function is deactivated, the objects may have not yet reached the optimal preservation temperature (approximately - 18°C), especially if their mass is large. One problem that needs to be solved is therefore to be able to optimize the freezer compartment temperature control so as to take into account the actual temperature of the objects stored therein, not only that of the air of the internal environment of the compartment.

During the operation of the refrigerating appliance, formation of frost may also occur, in particular on the coldest parts such as the evaporator of the refrigerating circuit, which is due to the moisture present inside the refrigerating appliance. The frost layer grows in operation, also leading to increased thermal insulation between the evaporator and the environment to be refrigerated, thus adversely affecting thermal exchange efficiency. An aggravating factor is found in refrigerating appliances of the type known as "no-frost". In these appliances, the evaporator operates in a condition of forced convection and is subject to greater load loss increase and icing.

In fact, in heavy operating conditions the evaporator gets covered with ice, which reduces its thermal exchange efficiency.

To regain operational efficiency, defrosting cycles are normally executed wherein the control system turns on heating means for thawing the frost, thus removing it from the evaporator. During the defrosting cycle, the compressor is normally turned off. The defrosting steps are normally activated at fixed time intervals, e.g. every 24 hours, and have a predefined duration.

This known defrosting procedure is not optimal, in that it is not dependent on the actual requirements of the refrigerating appliance, since it does not take into account situations wherein defrosting may not be necessary or wherein a longer time may be required, thus giving rise to low energetic efficiency situations.

One problem that needs to be solved is therefore to be able to optimize the defrosting steps so as to ensure the utmost energetic efficiency of a refrigerating appliance of any type equipped with an evaporator, thus optimizing the refrigerating appliance's energy consumption.

**[OBJECTS AND SUMMARY OF THE INVENTION]**

It is one object of the present invention to solve the above-described problems.

In particular, it is one object of the present invention to provide a method for controlling a refrigerating appliance equipped with a variable-speed compressor in a manner such as to ensure the utmost energetic efficiency in every operating step and condition, thus optimizing the refrigerating appliance's energy consumption and compressor speed.

It is another object of the present invention to provide a method and a device which allow to ensure a proper and reliable preservation of the contents of the refrigerating appliance. It is a further object of the present invention to provide a method for controlling a refrigerating appliance which can be economically implemented.

These and other objects of the present invention are achieved through a method and a refrigerating appliance incorporating the features set out in the appended claims, which are intended to be an integral part of the present description.

A general idea at the basis of the present invention is to provide a method for controlling a refrigerating appliance, said refrigerating appliance comprising a refrigerating circuit which includes an evaporator and a variable-speed compressor, and at least one compartment which is cooled by said refrigerating circuit, said method comprising the steps of: calculating, for said evaporator, a first compressor request function which depends on the evaporator temperature; calculating, for said at least one compartment, a second compressor request function which depends on the compartment temperature; calculating a total compressor request function which, if said first function is different from zero, is given by an operation of selecting between said first and second compressor request functions, or else, if said first function is null, is given by said second compressor request function multiplied by a reduction factor; controlling said compressor through said total compressor request function.

The present invention also relates to a refrigerating appliance which comprises a refrigerating circuit, a compartment cooled by the refrigerating circuit, a variable speed compressor included in the refrigerating circuit, a control unit operationally connected to the compressor and adapted to control the compressor rpm, wherein the control unit carries out the steps of the method according to the present invention.

It is also a particular object of the present invention to provide a method for controlling a refrigerating appliance, said refrigerating appliance comprising a refrigerating circuit that includes a variable-speed compressor, at least one fan for conveying refrigerating capacity, and at least one compartment cooled by said refrigerating circuit, said method comprising a step of determining a silencing condition of the refrigerating appliance by setting a fixed speed value of said fan.

The present invention also relates to a refrigerating appliance which comprises a control unit adapted to carry out the steps of the method.

It is also a particular object of the present invention to provide a method for controlling the temperature of a freezer compartment of a refrigerating appliance, said refrigerating appliance comprising a refrigerating circuit that includes at least one compressor and means for measuring the internal temperature of said freezer compartment, said method including a rapid freezing step activated upon command and deactivated when a determined threshold condition depending on the temperature of the compartment is reached, said rapid freezing step including the calculation of a modified temperature, generated by a low-pass filter function of said measurement of the internal temperature of the freezer compartment, and the deactivation of said rapid freezing step when said modified temperature reaches said threshold condition.

The present invention also relates to a refrigerating appliance which comprises a control unit adapted to carry out the steps of the method.

It is a another object of the present invention to provide a method for controlling the defrosting steps of a refrigerating appliance so as to ensure the utmost energetic efficiency, thus optimizing the refrigerating appliance's energy consumption and compressor speed.

It is a further object of the present invention to provide a method and a device which allow to ensure a proper and reliable preservation of the contents of the refrigerating appliance.

A general idea at the basis of the present invention is to provide a method for controlling the defrosting step of a refrigerating appliance, said refrigerating appliance comprising a refrigerating circuit that includes an evaporator, and at least one refrigerating compartment which is cooled by said refrigerating circuit, said method comprising the step of activating said defrosting step when a condition occurs wherein the temperature of said at least one compartment (TF) exceeds a maximum value (TFmax) and wherein at the same time the temperature of the evaporator (TEV) is below a minimum value (TEVmin).

The present invention also relates to a refrigerating appliance which comprises a refrigerating circuit, a compartment cooled by the refrigerating circuit, a variable speed compressor included in the refrigerating circuit, a control unit operationally connected to the compressor and adapted to control the compressor rpm, wherein the control unit carries out the steps of the method according to the present invention.

Further objects and advantages of the present invention will become more apparent from the following detailed description.

**[BRIEF DESCRIPTION OF THE DRAWINGS]**

One preferred and advantageous embodiment of the present invention will now be described by way of non-limiting example with reference to the annexed drawings, wherein:

- Figure 1 is an explanatory block diagram of a first variant embodiment of the method of the present invention;
- Figure 2 is an explanatory block diagram of a second variant embodiment of the method of the present invention;
- Figures 3 and 4 are diagrams of waveforms relating to signals generated by the method;
- Figure 5 shows an example of the time trend of quantities such as compartment temperatures, fan speed and compressor speed, obtained by using the method of the present invention;

- Figure 6 shows a second example of the time trend of quantities such as freezer compartment temperature, fan speed and compressor speed, obtained by using the method of the present invention.

The above-mentioned drawings show different aspects and embodiments of the present invention and, where appropriate, similar structures, components, materials and/or elements in the various drawings are designated by the same reference numerals.

**[DETAILED DESCRIPTION OF THE INVENTION]**

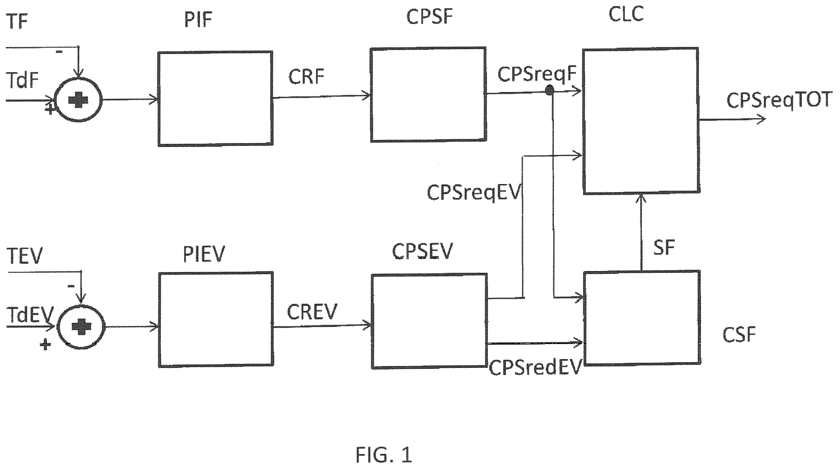

A first embodiment of the method of the invention will now be described with reference to Fig. 1, applied to a refrigerating appliance comprising a refrigerator or freezer compartment and normally also equipped with an evaporator. The actual temperatures of the compartment TF and of the evaporator TEV are measured by means of known temperature meters. Preset target temperature values are also available, designated TdF for the compartment and TdEV for the evaporator, respectively.

The temperature difference (error) values, respectively (TdF - TF) and (TdEV - TEV), are supplied to respective inputs of blocks PIF and PIEV, which calculate a proportional/integral function, which may be of a *per se* known type, on the input difference/error values, and which output respective refrigerating capacity request values, designated CRF and CREV, respectively (hereafter referred to as "cold requests") to the compressor control system. The cold requests CRF and CREV generated in the respective blocks PIF and PIEV take suitable values in the range of 0% to 100%. As the difference between the measured and desired values increases, the "cold request" from the element concerned will increase as well.

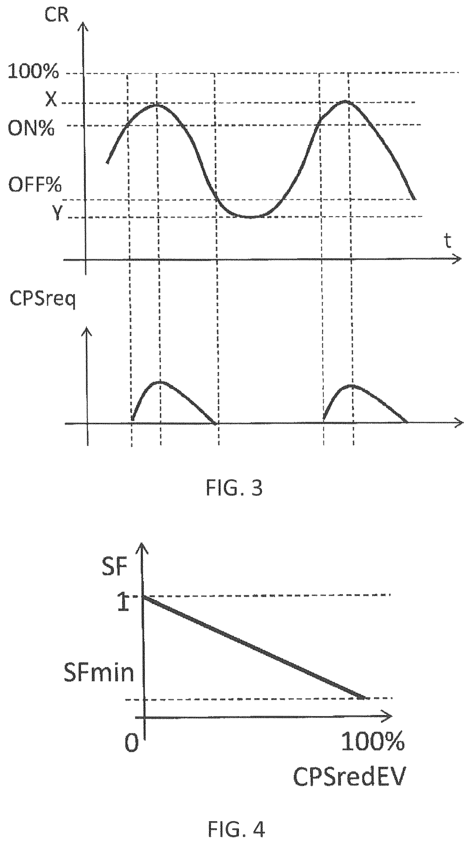

One example of a generic time trend of a "cold request" CR is shown in Fig. 3, expressed as a percentage oscillating between a minimum value (0%) and a maximum value (100%). The trend is of the same type for both CRF and CREV.

For each element (compartment and evaporator), two percentage values ON% and OFF% are preset which indicate limit values for compressor on and off requests, respectively; this means that when the value of CR calculated by PI exceeds the threshold ON%, the respective element (compartment or evaporator) requests that the compressor be turned on until the value of CR goes below the threshold OFF%, under which the element will request that the compressor be turned off, until the threshold ON% is exceeded again. The time trends of the "cold requests" of the various elements are independent of each other, with a possible relative time offset, even though there is a certain correlation between them, which is given by the thermodynamic system constituted by the refrigerating appliance.

The "cold request" values CRF and CREV are supplied to respective blocks CPSF and CPSEV, which determine corresponding percentage values of compressor start and speed request (hereafter referred to as "compressor request") CPSreqF and CPSreqEV. Fig. 3 shows a generic trend of CPSreq, which is indicative of CPSreqF and CPSreqEV, resulting from the trend of CR.

During the time periods elapsing from when the values of CRF or CREV exceed the threshold ON% to when said values return below the threshold OFF%, a compressor request trend different from zero will be obtained, whereas in the subsequent periods from when the values of CRF or CREV go below the threshold OFF% to when said values exceed the threshold ON% again, there will be a null compressor request: this means that in the time intervals of the first type compressor activity is requested in order to lower the actual temperature of the element, which is deemed to be too high, whereas in the intervals of the second type it is assumed that the temperature of the element is already low enough, so that there is no need to turn on the compressor for that element.

A non-limiting implementation example will now be described.

With reference to Fig. 3, from when the threshold ON% is exceeded, as long as the curve CR (CRF for the refrigerator compartment, CREV for the evaporator) grows, i.e. until it reaches a maximum value x, CPSreq (CPSreqF or CPSreqEV) is proportional to the difference between the value of CR (CRF or CREV) and the corresponding threshold ON%; when the curve CR (CRF or CREV) decreases, but is still above the threshold OFF%, CPSreq (CPSreqF or CPSreqEV) is proportional to the difference between the maximum value x and the threshold OFF%. Also the value of x depends on the compartment or on the evaporator.

More in detail, the block CPSF or CPSEV, e.g. CPSF, performs the following calculations.

The Cold Request CRF generated by PIF is in the following range:

$$0 < CRF < 100\%$$

In the block CPSF a first function CRF* is calculated, which is defined in sections as follows:

CRF* = (CRF - ON%), in the curve portion after the ON threshold is exceeded, with CRF increasing until reaching the maximum value x;

CRF* = (CRF - OFF) · (X - ON%) / 'X - OFF%), in the curve portion with decreasing CRF, i.e. after reaching the maximum value x, until the threshold value OFF% is reached;

CRF* = 0 outside said definition intervals.

It follows that the value of CRF* stays within the interval:

$$0 < CRF^* < (X - ON\%).$$

At this point, in order to obtain an output value of CPSreqF, the function CRF* is scaled in the range of 0 - 100%, so as to allow exploiting the compressor up to 100% of its power, thereby obtaining:

$$CPSreqF = CRF^* \cdot 100/(100 - ON\%)$$

In this way, CPSreqF can take values in the range of 0 < CPSreqF < 100%.

The block CPSEV, in addition to calculating CPSreqEV starting from CREV in a similar manner as described for the block CPSF, also calculates a second value CPSredEV, which expresses a compressor activity reduction request, as opposed to the contribution given by CPSreqEV, which is motivated by the following considerations.

If the evaporator temperature is high (it should always be significantly lower than that of the compartment(s)), more efficiency and lower consumption will be obtained per time unit; on the other hand, the compartment will not cool down quickly, and therefore the profile of the "cold request" curve CRF will decrease more slowly. However, since the compressor request CPSreqF is bound to the trend of CRF, the compressor will stay on for a longer time, leading to increased total consumption throughout the on period. It follows that, if on the one hand the compressor will favorably consume less energy per time unit, on the other hand it will stay on longer. Vice versa, if the evaporator temperature is low, the compartment will cool more rapidly and the compressor will stay on for a shorter time, but energy consumption will be higher per time unit. It is therefore preferable to balance these two antithetic contributions by keeping the evaporator temperature as high as possible and by turning off the compressor as soon as possible after the compartment has requested it to operate.

Therefore, CPSredEV is a value different from zero when there is no compressor request CPSreqEV from the evaporator, i.e. in the curve portion CREV after going below the threshold OFF% and until reaching and exceeding the threshold ON%.

In the block CPSEV a second function CREV** is calculated, which is defined in sections as follows:

CREV** = 'OFF% - CREV), in the curve portion wherein CREV goes below the OFF threshold and continues to decrease until reaching the minimum value Y,

CREV** = (ON% - CREV) · (OFF% - Y) / (ON% - Y), curve portion with increasing CREV, i.e. after reaching the minimum value Y and until reaching the threshold value ON%.

CREV** = 0 outside said definition intervals.

It follows that the value of CREV** stays within the interval:

$$0 < CREV^{**} < (OFF\% - Y).$$

At this point, in order to obtain an output value of CPSredEV, the function CREV** is scaled in the range 0 - 100%, so as to achieve better signal dynamics, thereby obtaining:

$$CPSredEV = CREV^{**} \cdot 100/(OFF\%)$$

In this way, CPSredEV can take values in the range of 0 < CPSredEV < 100%.

This value CPSredEV is brought to an input of a block CSF, the second input of which receives the compressor request value CPSreqF from the compartment. CPSredEV is expressed in percentage terms, i.e. over a scale from zero to 100 (abscissa of the graph of Fig. 4).

It is converted, according to an inverse proportionality relationship, into a scale factor SF between 1 and a minimum value SFmin, said minimum value SFmin being dependent on CPSreqF. This latter dependency is such that SFmin is higher when the request CPSreqF generated by the compartment is high, because in the presence of a high cold request from the compartment it is necessary to minimize the dynamics of the scaling action, whereas when the request CPSreqF generated by the compartment is low, then SF can take lower values and hence provide a greater scaling effect. For example, SF is obtained as follows:

$$SFmin = CPSreqF/100;$$

The values of CPSreqF, CPSreqEV and SF are sent to a calculation block CLC, which determines the actual compressor request percentage value CPSreqTOT given by the contributions of all elements.

With reference to the graphs of Fig. 3, in the periods when CPSreqEV is different from zero, CLC outputs a value of CPSreqTOT which is the higher one of CPSreqEV and CPSreqF. Instead, when CPSreqEV is zero, CLC outputs a value given by the product of CPSreqF and SF, *de facto* reducing the compressor request in these periods: this occurs in order to prevent excessive evaporator cooling due to the compartment request, which would lead the refrigerating circuit to operate less efficiently and hence to excessive, and unnecessary, energy consumption by the compressor.

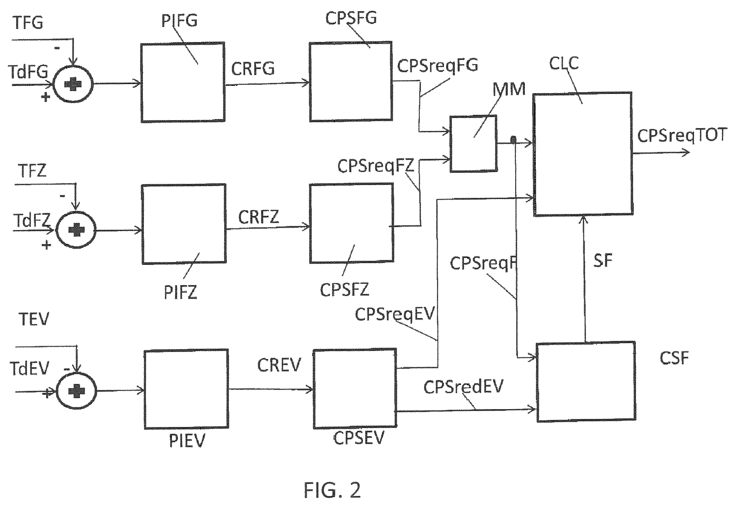

With reference to Fig. 2, the following will describe a method variant applied to the case of a refrigerating appliance comprising two compartments, e.g. a refrigerator compartment FG and a freezer compartment FZ, and, of course, the evaporator EV.

In this case, each compartment is equipped with its own actual temperature meter, respectively designated TFG for the refrigerator compartment and TFZ for the freezer compartment, in addition to, as in the previous case, the temperature meter of the evaporator TEV. Preset target temperature values are also available, designated TdFG for the refrigerator compartment, TdFZ for the freezer compartment, and TdEV for the evaporator, respectively.

As in the previous case, the temperature difference (error) values, respectively (TdFG - TFG), (TdFZ - TFZ) and (TdEV - TEV), are supplied to respective inputs of blocks PIFG, PIFZ and PIEV, which calculate a proportional/integral function on the input difference/error values, and which output respective "cold request" values, designated CRFG, CRFZ and CREV, respectively, to the compressor control system. As the difference between the measured and desired values increases, the "cold request" from the element concerned will increase as well.

As in the previous case, the "cold request" values CRFG, CRFZ and CREV are supplied to respective blocks CPSFG, CPSFZ and CPSEV, which determine corresponding compressor request values CPSreqFG, CPSreqFZ and CPSreqEV.

The blocks CPSFG and CPSFZ have functionalities wholly equivalent to the block CPSF, and the same applies to the block CPSEV, which outputs the same contributions CPSreqEV and CPSredEV as previously described.

In this case, the outputs CPSreqFG and CPSreqFZ are supplied to a block MM that performs the function of selecting the contribution CPSreqF to be outputted to the block CLC, which is wholly equivalent to the block CLC of the previous case. In particular, if both inputs are zero, MM will output zero; if either one of the two inputs is zero, it will output the other value; if both inputs have values other than zero, it will output the higher or lower one of the two values based on an evaluation of the chosen mode of operation of the refrigerating appliance. *De facto,* the lower one of the two values will correspond to the refrigerating appliance operating in an energy-saving "ECO" mode, hence reacting more slowly to the elements' thermal variations and using less energy, whereas the higher value will correspond to faster reactions to the elements' thermal variations, with increased energy consumption. The choice may be made, for example, through a manual selector.

The scale factor SF is obtained as previously described for the single-compartment case, depending on CPSredEV and on the value CPSreqF obtained at the output of the block MM.

In the case of a refrigerating appliance with more than two compartments, for each compartment evaluations will be made in regard to the cold request and to the compressor request from that compartment, in a manner wholly similar to the previous description. Each compressor request value is sent to a block wholly similar to MM of Fig. 2, which applies the above-described criteria for the selection of the output value, similar to CPSreqF, to be provided to a calculation block like the already described CLC'. In particular, the output value will be zero if all inputs are zero, or it will be the one different from zero if all others are zero, or it will be the highest or the lowest one of the input values other than zero, according to the above-described selection criteria.

In the case of a "no-frost" refrigerating appliance equipped with a damper for the refrigerator compartment as previously described, also the degree of damper opening can be adjusted based on a criterion like those already described.

In general, the damper can take a fully open or fully closed position, or an intermediate position, thus circulating a variable quantity of air inside the refrigerator compartment. A threshold parameter DMPth is defined, which is preset as a percentage level to be positioned on the graph of the curve of Fig. 3 relating to the progress of the cold request of the refrigerator compartment whereto the damper is applied. When the cold request curve of the refrigerator compartment takes values greater than DMPth, then the damper is fully open; for values below the threshold, the opening of the damper is modulated as a function of the difference between the threshold and the cold request, until a possible closure thereof, thus obtaining control interaction between the refrigerator compartment and the damper.

The general principle at the basis of the method for controlling the refrigerating appliance of the invention is that compressor requests coming from each compartment and from the evaporator are taken into account; compressor requests are normally made explicit by determining the compressor revolution speed, from a minimum value (or even compressor off) to a maximum value. If the evaporator temperature is high, then the evaporator will issue its own compressor request, which will be integrated with those coming from the compartments; if, on the contrary, the evaporator temperature is low, then the evaporator will issue a compressor request to reduce, not to increase, the compressor speed compared to the current requests being issued by the compartments. If the evaporator temperature is already sufficiently low, even if the compartments are requesting a higher compressor speed, this request can be reduced in order to optimize the compressor operation. The control method, therefore, gives priority to the requirements of the evaporator over those of the compartments. This optimizes the behavior of the refrigerating appliance in terms of energy consumption and energetic efficiency.

Making a control device for implementing the above-described method is not a problem for the man skilled in the art, who will have several hardware and software alternatives available. The temperature sensors of the compartments and of the evaporator are of a known type and are normally already present in the appliance.

The steps of the method may be carried out through a controller using known hardware. From a software viewpoint, the control method of the present invention can advantageously be carried out through a computer program, which comprises coding means for implementing one or more steps of the method when said program is executed by a computer. It is therefore understood that the protection scope extends to said computer program as well as to computer-readable means that comprise a recorded message, said computer-readable means comprising program coding means for implementing one or more steps of the method when said program is executed by a computer.

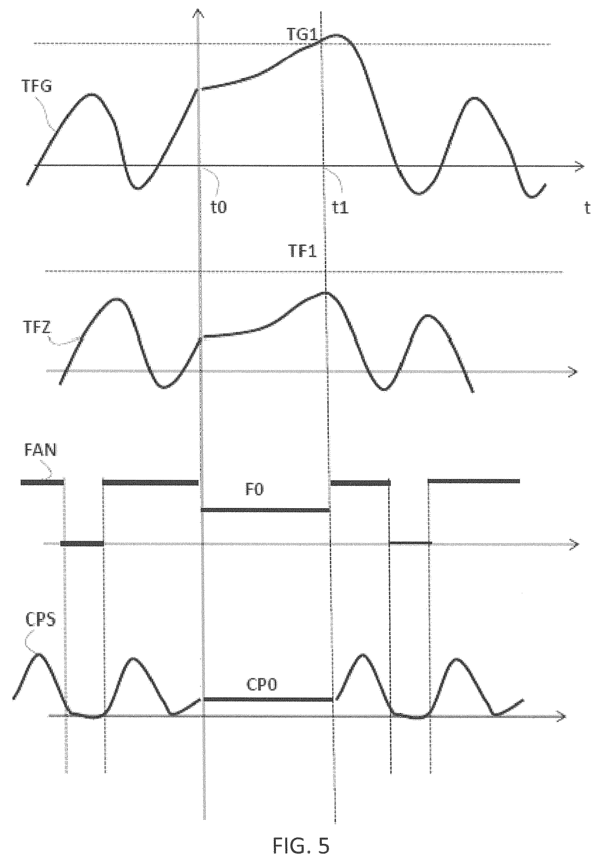

An embodiment of the method of the invention will now be described with reference to Fig. 5, applied to a refrigerating appliance comprising a refrigerator compartment and a freezer compartment, and normally also equipped with an evaporator. The refrigerating appliance is also equipped with a variable-speed compressor and fan.

In a normal operating condition, the temperatures in the refrigerator compartment TFG and in the freezer compartment TFZ are subject to oscillations, and the speeds of the fan FAN and of the compressor CPS may vary depending on known controls they are subject to: the fan is normally on when the compressor is on. This situation is represented in the left part of the graphs of Fig. 5, i.e. for t < t0. This normal operating situation generates certain noise levels, caused by the fan and compressor in operation.

In accordance with the method of the present invention, at a time t0 one may act upon a control element, such as a push-button, in order to start a low-noise or silencing condition of the refrigerating appliance.

In this condition, the fan speed is brought to a predetermined fixed low value F0.

Said value is such that the fan operates in a condition of low refrigerating capacity. This typically corresponds to a fan speed value lower than 60% of the maximum speed, preferably within a range of possible values between 40% and 60%, more preferably 50% of the maximum speed.

Preferably, since the compressor speed is variable, the method also provides for bringing the compressor speed to a predetermined fixed low value CP0 at time t0. This typically corresponds to a compressor speed value lower than 40% of the maximum speed, preferably within a range of possible values between 30% and 20%, more preferably 25% of the maximum speed. For example, if the maximum speed is 4,500 rpm, then the value will be brought to 1,200 rpm.

Preferably, if the refrigerating appliance is equipped with a variable-opening damper, this will be fully opened.

In this silencing condition, the temperature in the compartments may increase due to low-speed operation. Therefore, in accordance with another aspect of the invention, the method provides for checking the temperature of the compartments as follows: if it stays above the preset threshold values TG1, TF1, (time t1 in Fig. 5), which are dependent on the type of compartment, at least in one of the compartments for a time longer than a minimum value, e.g. 5 min, then the silencing condition will terminate and normal-speed operation will be resumed. This means that the temperature of the compartment will go down again.

For example, for a refrigerator compartment the threshold temperature may be + 8°C, while for a freezer compartment it may be - 18°C.

At any rate, operation in the silencing condition may be interrupted by acting again upon the control element.

Making a control device for implementing the above-described method is not a problem for the man skilled in the art, who will have several hardware and software alternatives available. The compartment temperature sensors, as well as the systems for controlling the fan and compressor speeds, are of a known type and are normally already present in the appliance.

The steps of the method may be carried out through a controller using known hardware. From a software viewpoint, the control method of the present invention can advantageously be carried out through a computer program, which comprises coding means for implementing one or more steps of the method when said program is executed by a computer. It is therefore understood that the protection scope extends to said computer program as well as to computer-readable means that comprise a recorded message, said computer-readable means comprising program coding means for implementing one or more steps of the method when said program is executed by a computer.

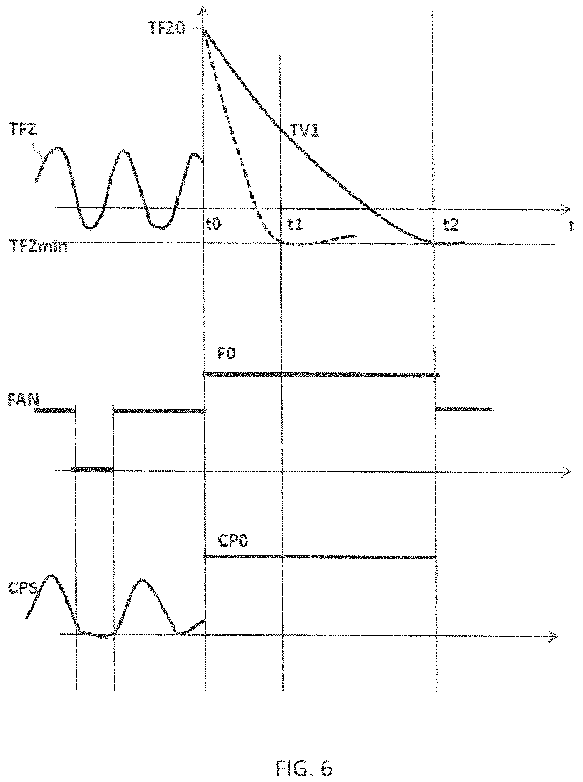

An embodiment of the method of the invention will now be described with reference to Fig. 6, applied to a refrigerating appliance comprising a freezer compartment and normally also equipped with an evaporator. The refrigerating appliance is also equipped with a variable-speed compressor and fan.

In a normal operating condition, the temperature in the freezer compartment TFZ is subject to oscillations, and the speeds of the fan FAN and of the compressor CPS may vary depending on known controls they are subject to: the fan is normally on when the compressor is on. This situation is represented in the left part of the graphs of Fig. 6, i.e. for t < t0. When foodstuff at room temperature, e.g. meat, is placed into the freezer compartment, the rapid freezing function is activated at time t0. From this instant, the compartment temperature increases rapidly, reaching a value TFZ0 determined by the temperature of the newly introduced foodstuff.

The temperature of the air inside the compartment then begins to decrease, following a trend indicated by a dashed line in Fig. 6. The known temperature control system measures the compartment's internal temperature, which *de facto* is determined by the air temperature: the predetermined cut-off temperature TFZmin (e.g. - 25°C), at which the system deactivates the rapid freezing function and returns to a normal control condition, is reached at an instant t1, when it can however be assumed that the actual temperature of the newly introduced foodstuff has not yet reached a sufficiently low value, but is still high, e.g. TV1.

In accordance with the method of the present invention, the progress of the temperature decrease of the introduced objects is taken into account by calculating a modified temperature representative of an estimated internal temperature of the objects just introduced.

Said modified temperature is generated by applying a low-pass filter to the thermal curve measured by the temperature meter, with a preset time constant. For example, the filter is of the first order with unity gain, time constant $\tau$ and transfer function F(s) in the Laplace domain equal to:

$$F(s) = 1 / (1 + s\tau)$$

*De facto,* the operation time of the rapid freezing function is increased until the modified temperature, and hence the estimated internal temperature of the newly introduced objects, reaches the cut-off temperature TFZmin, at a time t2 greater than t1, thus simulating the thermal inertia of the newly introduced objects.

Preferably, it is also checked that the temperature TFZmin is maintained for a certain time, e.g. 10 m.

As a further improvement, it is conceivable to provide a switch allowing the user to enter a parameter bound to the type of objects introduced and/or to the weight thereof, e.g. the approximate weight of meat; in such a case, said time constant will be a function of said parameter.

Throughout the period from t0 to t2, the compressor, if of the variable-speed type, is kept at its maximum speed CP0; also the fan, if present, is kept at its maximum speed F0.

In a variant of the method, a fixed-speed compressor is kept on throughout the period from t0 to t2.

At the end of this period, the freezer compartment will return to a normal control mode. The method of the present invention offers the advantage of an optimal temperature control which is no longer based, as in known systems, only on controlling the temperature of the air inside the compartment, but which gives priority to controlling the temperature of the objects placed therein, thus ensuring better preservation of the latter. Making a control device for implementing the above-described method is not a problem for the man skilled in the art, who will have several hardware and software alternatives available. The freezer compartment temperature sensor, as well as the systems for controlling the fan and compressor speeds, are of a known type and are normally already present in the appliance.

The steps of the method may be carried out through a controller using known hardware. From a software viewpoint, the control method of the present invention can advantageously be carried out through a computer program, which comprises coding means for implementing one or more steps of the method when said program is executed by a computer. It is therefore understood that the protection scope extends to said computer program as well as to computer-readable means that comprise a recorded message, said computer-readable means comprising program coding means for implementing one or more steps of the method when said program is executed by a computer.

One preferred and advantageous example of embodiment of the present invention will now be described, applied to a refrigerating appliance of any type equipped with an evaporator and one or more compartments, whether refrigerator or freezer ones. The actual temperatures of each compartment and of the evaporator are measured by means of known temperature meters.

The method of the present invention is based on the analysis of the thermal situation arising when frost is formed on the evaporator. In this condition, the evaporator temperature tends to decrease due to less thermal exchange with the outside environment. At the same time, the compartments receive less refrigerating capacity from the evaporator, still due to reduced thermal exchange, so that their internal temperature will tend to increase.

Therefore, in accordance with the present invention, the defrosting function is activated when, having the temperature of at least one compartment risen above a maximum value, preferably for a certain minimum persistence time, it occurs that the evaporator temperature is below a minimum value.

In a non-limiting example, said maximum value is 8 °C for a refrigerator compartment, -15 °C for a freezer compartment; as a non-limiting example, said minimum value of the evaporator temperature is -35 °C.

More in particular, the following general formula for the activation of the defrosting function is obtained in the case of a refrigerating appliance with one compartment:

$$[TEV < TEVmin] \text{ AND } [TF > TFmax \text{ (preferably for a time t2)}]$$

where TEV is the instantaneous evaporator temperature, TEVmin is the minimum value thereof, TF is the compartment temperature, TFmax is the maximum value thereof.

If there are multiple compartments, a logic OR will have to be applied between the conditions in which the temperatures of the compartments exceed the respective thresholds, meaning that the crossing of the threshold will have to be verified in at least one of the compartments, with an associated minimum persistence time for verification purposes.

Preferably, the defrosting step will start when said condition has occurred for a minimum time t2; by way of non-limiting example, the minimum time t2 is 10 min. The defrosting step will last until the evaporator temperature exceeds a predefined threshold value TEVmax, or until reaching a maximum duration time of the defrosting step itself. At the end of the defrosting step, normal operation will be resumed.

In a non-limiting example, deactivation occurs when the evaporator exceeds a threshold (17 °C), or anyway after 50 min have elapsed from the beginning of the defrosting step.

This ensures that the defrosting step will only start when really needed, avoiding any unnecessary energy consumption to activate the heating resistor, or that said step will last longer than a predefined time, if necessary, due to excessive frost that would otherwise cause undue variations of the compartments' internal temperatures.

Making a control device for implementing the above-described method is not a problem for the man skilled in the art, who will have several hardware and software alternatives available. The temperature sensors of the compartments and of the evaporator are of a known type and are normally already present in the appliance.

The steps of the method may be carried out through a controller using known hardware. From a software viewpoint, the control method of the present invention can advantageously be carried out through a computer program, which comprises coding means for implementing one or more steps of the method when said program is executed by a computer. It is therefore understood that the protection scope extends to said computer program as well as to computer-readable means that comprise a recorded message, said computer-readable means comprising program coding means for implementing one or more steps of the method when said program is executed by a computer.

It is apparent that many changes may be made to the present invention by those skilled in the art without departing from the protection scope thereof as stated in the appended claims.

These embodiments will nonetheless still fall within the protection scope of the present invention.

**Claims**

1. A method for controlling a refrigerating appliance, said refrigerating appliance comprising a refrigerating circuit that includes a variable-speed compressor, at least one fan for conveying refrigerating capacity, and at least one compartment cooled by said refrigerating circuit, said method comprising a step of determining a silencing condition of the refrigerating appliance by setting a fixed speed value of said fan,
said method being **characterized by** comprising, in said silencing condition, the steps of:

  - checking the temperature of said at least one compartment;
  - if said temperature stays above a threshold value (TG1, TF1) for a time longer than a minimum value, terminating said silencing condition.

**2.** A method according to claim 1, wherein said fixed fan speed value is lower than 60% of the maximum speed, preferably within a range of values between 40% and 60%, more preferably 50%, of the maximum speed.

**3.** A method according to claim 1, wherein said step of determining a silencing condition comprises setting a fixed compressor speed value.

**4.** A method according to claim 3, wherein said fixed compressor speed value is lower than 40% of the maximum speed, preferably within a range of values between 30% and 20%, more preferably 25%, of the maximum speed.

**5.** A method according to any one of the preceding claims, wherein the refrigerating appliance is fitted with a variable-opening damper, and wherein in said silencing condition said damper is fully open.

FIG. 1

FIG. 2

FIG. 3

FIG. 4

FIG. 5

FIG. 6

Europäisches
Patentamt

European
Patent Office

Office européen
des brevets

# EUROPEAN SEARCH REPORT

Application Number

EP 16 16 8859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/100883 A1 (YORK INT CORP [US]; CRANE CURTIS CHRISTIAN [US]; HILL IV FRANK HIGHLAN) 27 October 2005 (2005-10-27) * paragraphs [0007] - [0043]; figures 1-4 * | 1-5 | INV. F25D17/06 F25B49/02 F25D29/00 |
| A | US 6 772 601 B1 (DAVIS KENNETH E [US] ET AL) 10 August 2004 (2004-08-10) * the whole document * | 5 | |
| A | US 2009/277196 A1 (GAMBIANA DENNIS S [US] ET AL) 12 November 2009 (2009-11-12) * the whole document * | 1 | |
| A | US 2011/041532 A1 (PRESTON PHILIP K [US] ET AL) 24 February 2011 (2011-02-24) * the whole document * | 1 | |

TECHNICAL FIELDS
SEARCHED      (IPC)

F25B
F25D

The present search report has been drawn up for all claims

| Place of search | Date of completion of the search | Examiner |
|---|---|---|
| The Hague | 22 August 2016 | Kolev, Ivelin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................................

& : member of the same patent family, corresponding
document

EPO FORM 1503 03.82 (P04C01)

EP 3 076 112 A1

## ANNEX TO THE EUROPEAN SEARCH REPORT
## ON EUROPEAN PATENT APPLICATION NO.

EP 16 16 8859

This annex lists the patent family members relating to the patent documents cited in  the above-mentioned European search report.
The members are as contained in the European Patent Office EDP file on
The European Patent Office is in no way liable for these particulars which are merely given for the purpose of information.

22-08-2016

| Patent document cited in search report | | Publication date | Patent family member(s) | | Publication date |
|---|---|---|---|---|---|
| WO 2005100883 | A1 | 27-10-2005 | CA | 2563061 A1 | 27-10-2005 |
| | | | CN | 1969156 A | 23-05-2007 |
| | | | EP | 1735573 A1 | 27-12-2006 |
| | | | JP | 4495755 B2 | 07-07-2010 |
| | | | JP | 2007532859 A | 15-11-2007 |
| | | | KR | 20060133101 A | 22-12-2006 |
| | | | TW | I337243 B | 11-02-2011 |
| | | | US | 2005223725 A1 | 13-10-2005 |
| | | | WO | 2005100883 A1 | 27-10-2005 |
| US 6772601 | B1 | 10-08-2004 | CA | 2422160 A1 | 14-09-2004 |
| | | | US | 6772601 B1 | 10-08-2004 |
| US 2009277196 | A1 | 12-11-2009 | US | 2009277196 A1 | 12-11-2009 |
| | | | US | 2009277197 A1 | 12-11-2009 |
| US 2011041532 | A1 | 24-02-2011 | NONE | | |

EPO FORM P0459

For more details about this annex : see Official Journal of the European Patent Office, No. 12/82

18